# EUROPEAN PATENT APPLICATION

(11) **EP 1 129 790 A2**
(43) Date of publication of application: **05.09.2001**
(21) Application number: 00830664.9
(22) Date of filing: 11.10.2000
(51) Int. Cl.: B05D 7/24, B05D 7/02

(54) **Thin film structure and method for manufacturing an abrasion resistant and UV radiations shield treatment for plastic substrates**

(30) Priority: 27.12.1999 IT RM990798
(71) Applicant: CE.TE.V. CENTRO TECNOLOGIE DEL VUOTO, I-61067 Carsoli (AQ) (IT)
(72) Inventor: Misiano, Carlo, 00161 Roma (IT); Mengali, Sandro, 00100 Roma (IT); Simonetti, Enrico, 00146 Roma (IT); Sartori, Paolo, 00149 Roma (IT)

(57) **Abstract**

Thin film structure and method to realize a treatment for plastic substrates, abrasion resistant and UV radiation shield obtainable by utilizing different deposition techniques: PECVD for scratch treatment and "ION Plating", plasma assisted for UV radiation shielding, by using ZnS. The invention lies in the field of under vacuum treatments, and in the applicative field for the manufacture of car glasses, of building glasses and of any plastic material which must be exposed to UV radiation or must become abrasion resistant. The most significant advantage is that the treatment is realized with a single vacuum cycle, effected in a plant, for example "in-line" one.

## Description

The invention concerns a method to realize a treatment for plastic substrates, abrasion resistant and UV radiation shield. The most significant aspect of the invention lies in using Zinc Sulfide, ZnS, as filter for UV radiations, applied in one or more layers.

As known, glass has been often substituted by plastics. This created the necessity to protect plastic materials from the abrasion caused by their scarce hardness and from the damage caused by solar ultraviolet radiations.

As prior art the USA Patent No. 5.156.882 is cited. In the following, it will be explained how the present invention represents a new step in the specific technique. The present invention consists in a method more simple and not expensive able to realize these kinds of treatments. In addition, this invention is suitable to obtain manufacture treatments which, together with scratch resistance and UV shield, show other optical characteristics such us reflection of IR and antireflection of VIS light. The invention is also realizable by a single deposition cycle in a vacuum plant. For these reasons this new method is easier and less expensive respect to the previous solutions.

This invention has a very large application range: car windows, in the automotive field, realized in plastic material, generally in polycarbonate, are just an example.

As already said, the invention based on the use of Zinc Sulfide, ZnS, as filtering element for the Ultraviolet radiations.

The use of this material, utilized even in the past to realize treatments, is possible, in the present invention, by means of the new deposition processes which make them stronger mechanically and, from the environmental point of view, reliable and stable. "Reliable" and "Stable" mean that the resultant characteristics of this new deposition process do not change if weathered even in bad conditions as it happens to the car windows.

This method can be applied to any other plastic component which must be exposed to UV radiations and be resistant to abrasion.

The traditional processes, which utilize the PECVD techniques, both to realize UV filter and anti-scratch layer, use as filters, materials composed with titanium, obtained by means of precursors like TIPOT (tetraisopropilortotitanat). The filtering effect obtainable is not the best, since the UV cut is placed at too low wavelength.

Other methods considered the best at present, to realize UV filters, utilize lacquering immersion process, spray and so on.

Other solutions found so far present some disadvantages:
- UV WET filter, with WET hardening produces unsatisfactory hardness.
- UV WET filter with an under vacuum hardening needs a process in two cycles, so it is more expensive.
- An under vacuum UV filter, with an hardening under vacuum, is described in the cited USA Patent : the filter is deposited by PECVD and filtering agents are the following oxides:
   Titanium oxide, zinc oxide, cerium oxide. In fact, only titanium oxide is available as organic liquid precursor which does not supply the cut requested.

The method here presented, on the contrary, guarantees a very good UV cut and in addition it is easily realizable in a single vacuum cycle both for the UV filtering treatment and for the hardening treatment.

In addition, ZnS is suitable to be included in interferential optical multilayers able to reflect IR or anti-reflect VIS light while maintaining its UV shield function.

This material, as said before, utilized especially in the past, to realize optical treatments, deposited as thin film by traditional techniques, showed limits because of its poor hardness and high hygroscopicity, especially when deposited at low temperature as requested for treatments on plastic substrates. The use of a new process based on the Ion plating techniques plasma assisted allowed to the inventors to realize a ZnS film both hard and insensitive to humidity, even if deposited at ambient temperature, being this film also mechanically and chemically compatible with a SiOxCy hardening layer deposited by PECVD.

The manufacturing industries for plastic components, particularly polycarbonate, indicate as dangerous for the stability of the component, every radiation with wave-length below of 360-370 nanometers.

However, the advantages depend also on the possibility to integrate in a single cycle vacuum, for instance in an "in line" plant of the deposition of both the UV filter and the anti-scratch layer realized by PECVD. In addition, the ZnS is very good for a fast deposition of the layer being therefore less expensive. In fact, ZnS is much less expensive respect to the other filtering materials, used so far such a Cerium Dioxide CeO₂. A reactive deposit is not necessary. So the process control is simplified and the operation is faster.

In conclusion, by this invention, an antireflection to UV rays, resistant to environment agents, simple and less expensive structure has been realized.

The invention is described in the following for an illustrative and not limitative sake, based on the solution actually preferred by the inventor and referring to the enclosed figures.

Fig. I Spectrophotometric profile of the ZnS treatment on polycarbonate.

Fig. 2 Spectrophotometric profile of the ZnS treatment on glass.

Fig. 3 Schematic representation of three possible configurations for the protection treatment of scratch and UV radiations (a), (b), (c) and (d).

Fig. 4 Spectrophotometric profile of scratch and UV radiations protection realized on polycarbonate as for the configuration of Fig. 3(b).

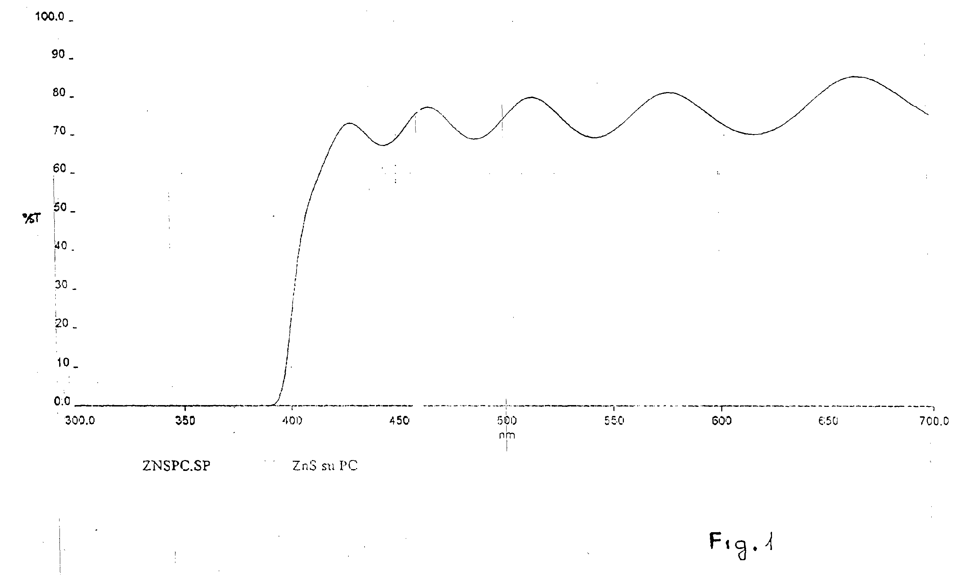

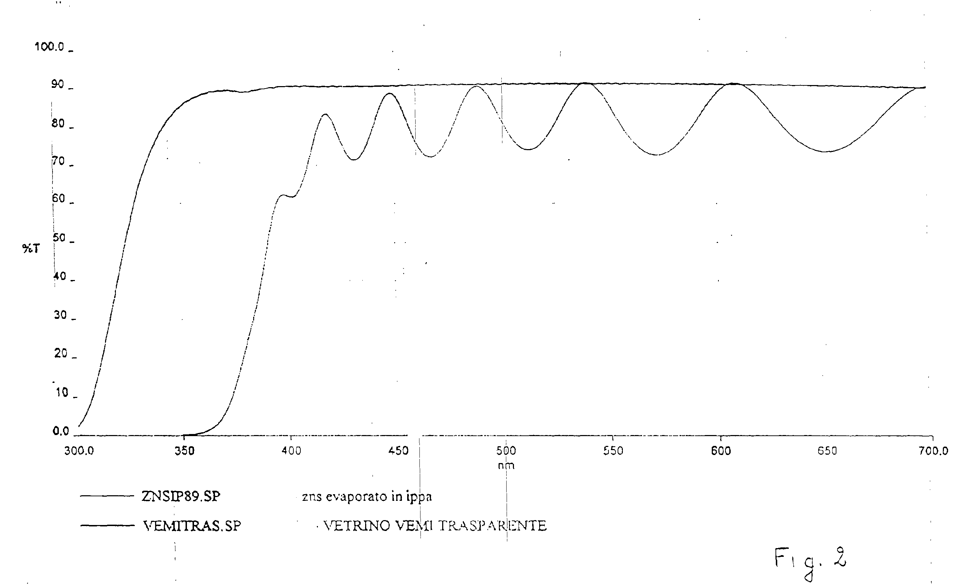

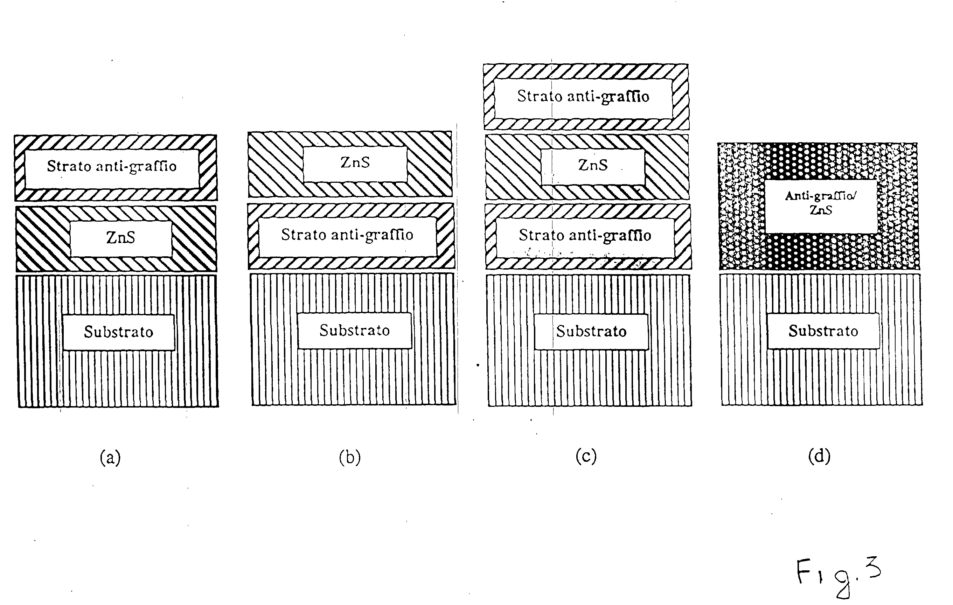

In Fig. 1, the spectrophotometric profile in transmission of the ZnS deposited on polycarbonate can be seen.

Fig. 2 refers to the spectrophotometric profile in transmission of the ZnS treatment deposited on glass VEMI and compared with the not treated substrate, on VEMI glass, to point out the filtering characteristics of the ZnS film.. In this case the absorbance due to the polycarbonate is not present.

This ZnS thin film is a component in a multilayer structure which can have many configurations.

Fig. 3 refers to some configurations for the scratch and UV radiations protection. In Fig. 3(a) the ZnS is under the anti-scratch layer; in Fig. 3(b) it is over the hardening layer; in Fig. 3(c) it is between two hardening layers. In Fig. 3(d) ZnS and the anti-scratch layer are mixed.

In the structure described in Fig. 3(a), (b) e (c), the most natural method for the deposition of the anti-scratch layer is the PECVD. This anti-scratch layer, of course, can be deposited also by lacquering.

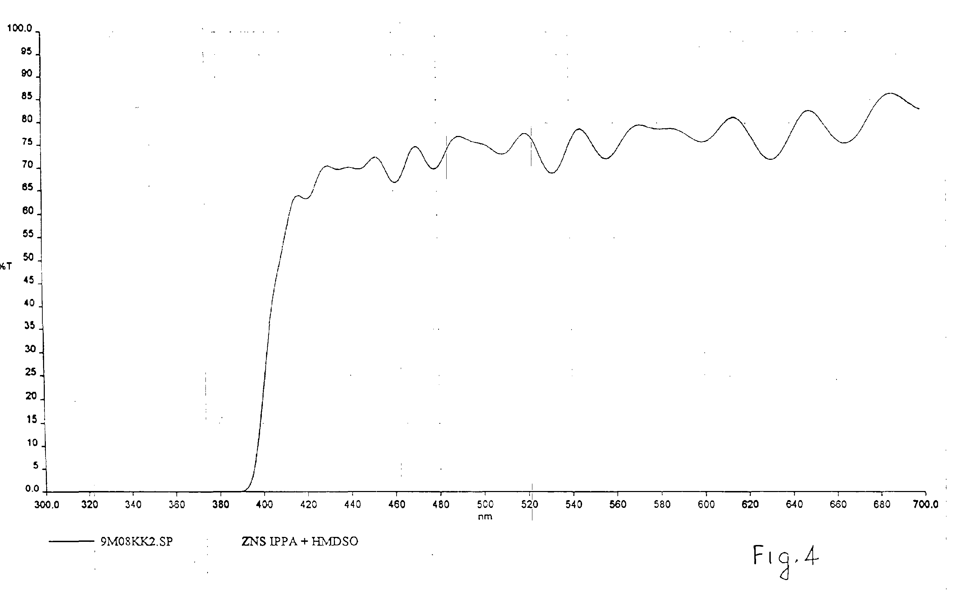

Fig. 4 refers to the spectrophotometric profile in transmission of the anti-scratching plus a ZnS film deposited on polycarbonate as the scheme in Fig. 3(a).

The ZnS film can be realized even as a component of an optical multilayer structure interferential, suitable to give particular properties also to the component as: - solar coating filtering, to minimize the heating environment on which the window lies. In this case, ZnS, which can be present also with many interferential layers, has a double function: as filter of UV light and as interferential layer. Naturally its thickness must be so as to guarantee the desired UV rays attenuation.

The typical thickness of a ZnS filtering film is markedly low in respect to the anti-scratch layer. In fact the latter is some microns, while ZnS is some hundred of nanometers (nm).

For illustrative and not limitative sake the method to obtain a thin film structure, realized by a treatment for plastic substrates, resistant to the scratch and filtering for UV is described in the following.

The present method has been invented by the authors thanks to an experience finalized to realize a treatment for car windows.

With a vacuum plant like an "in-line" plant, some configuration for the realization of the new UV shields plus anti-scratch structure are described.

### Structure as in Fig. 3(a)

- deposition of a ZnS film on a polycarbonate substrate, by a ION
   PLATING technique, plasma assisted in argon ambient, of thickness about 400nm;
- deposition of an anti-scratching film like SiOₓC_{y}, deposited by radiofrequency PECVD, using as precursor hexa-methil-di-sil-oxane for a global thickness of 2 to 8 micron, as desired;
- Structure as in Fig. 3(b)
   Deposition, on a polycarbonate substrate, of an anti-scratch layer, by a PECVD technique, of thickness 2 to 8 micron about; on the top of which a ZnS film about 400 nm thick is deposited by an ION PLATING technique, plasma assisted, in argon ambient.
- Structure as in Fig. 3(c)
   Deposition on a polycarbonate substrate, by PECVD technique, of an anti-scratch layer, then of a ZnS film by ION PLATNG technique and, successively, an other anti-scratch layer deposited by PECVD technique at radio-frequency, using hexa-methil-di-sil-oxane precursor;
- Structure as in Fig. 3(d)
In this case, the substrate to be treated must be inserted in a plant properly structured, able to effect a co-deposition process, or an alternate deposition, of very thin layers, typically some nanometers, so to realize the structure of a film partially organic, SiOₓC_{y}, in which the ZnS is distributed.

The final result, for all structures described, is a structure significantly more resistant to abrasion, and offering a proper shield aganst UV radiation respect to known solutions.

## Claims

1. Thin film structure for the superficial treatment of plastic transparent substrates, typically in polycarbonate, to make them resistant to abrasion and protect them from the solar ultraviolet radiations, by means of a process as follows, utilizing a plant like an "in-line" plant, and considering that the anti-scratch layer can be deposited also by lacquering;
- the substrate to be treated is placed in the vacuum plant; then on the polycarbonate substrate ((3)a)) a ZnS film is deposited by a "ION PLATING" technique, plasma assisted in a preferable argon ambient, with a typical 400 nm thickness;
- an antiscratch film typically made of SiOₓC_{y} is deposited by PECVD, at radio frequency, using as precursor preferably hexamethil-di-sil-oxane, for a global thickness of 2 to 8 micron, as desired;
- (3(b)) - on a substrate in polycarbonate an anti-scratch layer is deposited by a PECVD technique, plasma assisted in argon ambient, with a thickness of 2 to 8 micron; then a ZnS film is deposited by ION PLATING technique, plasma assisted preferable in argon ambient, with a typical thickness of about 400 nm;;
- (3(c)) - on a polycarbonate substrate an anti-scratch layer is deposited by a PECVD technique, then a ZnS film is deposited by ION PLATING technique and then an other anti-scratch layer, deposited by PECVD technique at radio-frequency, using hexa-methil-di-sil-oxane as precursor.

2. Thin film structure, for the superficial treatment of plastic transparent substrates, typically in polycarbonate, to make them resistant to the abrasion and protect them from the solar ultraviolet radiations, as for the Claim 1, in which the UV filter is deposited under vacuum, while the anti-scratch film is deposited by lacquering.

3. Thin film structure, for the superficial treatment of plastic transparent substrates, typically in polycarbonate, to make them resistant to the abrasion and protect them from the solar ultraviolet radiations, realizing it by co-deposition alternate or deposition, SiOₓC_{y} layers on some nanometers, obtained by PECVD technique and ZnS obtained by PVD, in order to obtain a film partially organic of SiOxCy in which ZnS is distributed, being all in an properly structured plant.
